(19) Europäisches Patentamt
European Patent Office
Office européen des brevets

(11) **EP 3 560 896 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **19170515.1**

(22) Anmeldetag: **23.04.2019**

(51) Internationale Patentklassifikation (IPC):
*C03B 33/02* (2006.01)     *A61J 1/06* (2006.01)
*B65B 1/02* (2006.01)      *C03B 33/04* (2006.01)
*C03B 33/06* (2006.01)     *C03C 23/00* (2006.01)
*B23K 26/382* (2014.01)

(52) Gemeinsame Patentklassifikation (CPC):
**B23K 26/382; B65B 1/02; C03B 33/0222;
C03B 33/04; C03B 33/06; C03C 23/0025**

(54) **VERFAHREN UND VORRICHTUNG ZUR HERSTELLUNG VON GLASHOHLKÖRPERPRODUKTEN SOWIE GLASHOHLKÖRPERPRODUKTE UND DEREN VERWENDUNG**

METHOD AND DEVICE FOR THE PREPARATION OF GLASS HOLLOW BODY PRODUCTS AND GLASS HOLLOW BODY PRODUCTS AND THEIR USE

PROCÉDÉ ET DISPOSITIF DE FABRICATION DE PRODUITS À CORPS CREUX DE VERRE AINSI QUE PRODUITS À CORPS CREUX DE VERRE ET LEUR UTILISATION

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **24.04.2018 DE 102018109820**

(43) Veröffentlichungstag der Anmeldung:
**30.10.2019 Patentblatt 2019/44**

(73) Patentinhaber: **SCHOTT AG
55122 Mainz (DE)**

(72) Erfinder:
• **WITZMANN, Dr. André
95679 Waldershof (DE)**
• **WAGNER, Fabian
55118 Mainz (DE)**

(74) Vertreter: **Blumbach · Zinngrebe Patentanwälte
PartG mbB
Alexandrastraße 5
65187 Wiesbaden (DE)**

(56) Entgegenhaltungen:
DE-A1- 102015 116 848     DE-B- 1 114 992
US-A1- 2015 034 612       US-A1- 2015 140 735

• **SCHOTT AG: "Fiolax, The premium way to package health", 15 March 2017 (2017-03-15), pages 1 - 33, XP93113169, Retrieved from the Internet <URL:Applicant> [retrieved on 20231218]**

## Beschreibung

Gebiet der Erfindung

Die Erfindung bezieht sich auf ein Verfahren zur Herstellung von Glashohlkörperprodukten, auf eine Vorrichtung zur Herstellung von Glashohlkörperprodukten, auf ein Glashohlkörperprodukt an sich, sowie auf die Verwendung dieser Glashohlkörperprodukte.

Mit den Glashohlkörperprodukten können sowohl zum Einsatz fertige Glashohlkörperprodukte als auch Glashohlkörpervorprodukte, die noch einer Weiterverarbeitung zugeführt werden können oder müssen, wie zum Beispiel Glashohlkörper-Abschnitte, gemeint sein. Diese Glashohlkörperprodukte oder Glasbehälter können des Weiteren runde oder unrunde Querschnitte, längliche Hohlkörper mit konstantem oder variablem Durchmesser entlang ihrer Längserstreckung haben.

Bevorzugt betrifft die Erfindung Glashohlkörperprodukte, insbesondere zumindest vorwiegend zylindrische Glashohlkörperprodukte, wie Glasrohre oder Glasrohrabschnitte, sowie auch aus dem Glashohlkörperprodukt durch Weiterverarbeitung hergestellte hohle Glaserzeugnisse, wie Glasrohrfläschchen, Glasampullen, Glaskarpulen oder Glasspritzen.

Hintergrund der Erfindung

Üblicherweise werden beim Rohrherstellungsprozess, zum Beispiel zur Herstellung von Primärpackmitteln für pharmazeutische Produkte, Einzelrohre aus einem Endlosstrang durch Sprödbruch hergestellt. Nachteil beim konventionellen Sprödbruch ist die Erzeugung von Splittern oder Glaspartikeln, die auch in das Rohrinnere gelangen können.

Solche Splitter oder Glaspartikel lassen sich durch ein wärmeweiches Trennverfahren vermeiden.

Die DE 44 44 547 C2 sieht ein Verfahren zum wärmeweichen Trennen von Glasrohren oder Glasplatten vor durch Erweichen des Glasrohres oder der Glasplatte an der Trennstelle, Verringerung der Wandstärke in dem erweichten Bereich durch Ausziehen und anschließendes Trennen durch weiteres Erhitzen, wobei man bei dünnwandigen Rohren oder Platten mit einer Wandstärke von höchstens 0,2 mm das Glas in einer Breite von höchstens 0,4 mm erweicht, den erweichten Bereich durch Ausziehen auf eine Wandstärke von höchstens 0,05 mm bringt, wobei die Ausziehlänge mindestens das fünffache der ursprünglichen Wandstärke beträgt, und anschließend durch weiteres Erhitzen im ausgezogenen Bereich trennt.

Die DE 100 47 850 A1 gibt ein Verfahren an, womit sich Glasrohre von einem laufenden Glasstrang abtrennen lassen, ohne dass hierbei Splitter entstehen, die anschließend durch einen Waschprozess entfernt werden müssen. Bei dem Verfahren zum Ablängen von Glasrohren wird ein Glasstrang gezogen, eine Heizeinrichtung zusammen mit dem Glasstrang verfahren und dabei auf den Bereich einer Soll-Trennstelle gerichtet, der Glasstrang wird im Bereich der Soll-Trennstelle gestreckt, es wird eine Trenneinrichtung zusammen mit dem Glasstrang verfahren und die Trenneinrichtung wird derart betätigt, dass sie den Glasstrang an der Soll-Trennstelle durchtrennt.

Die DE 10 2015 116 848 A1 betrifft ein Verfahren zur Herstellung eines Werkstücks aus einem dielektrischen Material, welches mindestens eine Zone mit definiert ausgebildeter Festigkeit aufweist. Dazu werden mit einem Kurzpuls- oder Ultrakurzpulslaser mit einer Wellenlänge im Transparenzbereich des Werkstücks Hohlräume im Werkstück erzeugt, die im Wesentlichen röhrenartig ausgebildet sind, so dass ihre Länge größer ist als ihr Durchmesser ist und die Bereiche des dielektrischen Materials, welche die Hohlräume umschließen, zumindest teilweise eine größere Dichte aufweisen als die Bereiche, welche sich außerhalb der Zone mit definiert eingestellter Festigkeit befinden.

In der US 2015/0034612 A1 wird ein nicht-ablatives Verfahren zum Bearbeiten von Öffnungen, insbesondere zum Bohren von Löchern in Materialien durch Laserfilamentation beschrieben. Als eine Anwendung eines gebohrten Substrats ist auch die Verwendung als Filter zur Luftüberwachung, Partikelüberwachung und dergleichen genannt. Diese erfordern üblicherweise Öffnungen mit einem Durchmesser von einigen hundert Nanometern bis einigen zehn Mikrometern. Auch die US 2015/0140735 A1 beschreibt ein Verfahren zur Materialbearbeitung durch Einfügen von Filamenten mittels eines Ultrakurzpuls-Lasers, um Öffnungen in Glasscheiben herzustellen.

Die DE 1114992A beschreibt ein Verfahren zum Schützen der Enden von Glasröhren, aus denen Ampullen gefertigt werden, gegen Bruch. Dabei wird das eine Ende ganz und das andere Ende bis auf eine kleine Öffnung mit einem Brenner zugeschmolzen. Der Zweck der an einem Ende vorgesehenen Öffnung besteht darin, den atmosphärischen Druckausgleich sowie das Entweichen der beim Verschmelzen innerhalb der Röhren erhitzten Luft.

Da im kontinuierlichen Glashohlkörper-Ziehprozess der Trennvorgang bei einer Glastemperatur von ca. 150°C und 350°C abläuft, entsteht bei der Abkühlung auf Raumtemperatur ein Unterdruck im Glashohlkörper. Dieser Unterdruck im Glashohlkörper kann sich negativ auf die Weiterverarbeitung auswirken, da übliche Prozesse nicht auf Unterdruck im Glashohlkörper-Inneren ausgelegt sind. Insbesondere stellt das Öffnen eines Glashohlkörpers mit Unterdruck im Inneren ein hohes Risiko des Partikeleintrags in das Glasinnere dar und kann unter Umständen die Formgebung behindern.

Für den Druckausgleich wird nach dem Stand der Technik mit einem Laser oder konventionell mit einem Brenner eine Entlüftungsbohrung in das heiße Glasrohr eingebracht. Damit wird die Bildung eines Unterdrucks im Rohrvolumen vermieden. Dies wird beispielsweise in der EP 1 369 389 A2 offenbart.

Bei der Konfektionierung von Glasrohren kann ein partikelfreier Verschluss meist nicht gewährleistet werden. Neben offenen Rohrenden existiert die Ausführung Densocan®, bei der die Rohrenden verschlossen sind und der Druckausgleich des Rohrinneren durch eine seitliche Entlüftungsöffnung mit einem Durchmesser von ca. 1 bis 3 mm oder 1,5 bis 3,5 mm realisiert wird. Durch diese Entlüftungsöffnung können Partikel, wie beispielsweise Verunreinigungen, insbesondere während des Transports des ansonsten hermetisch geschlossenen Rohres eindringen. Zusätzlich stellt der Prozess der Entlüftungslochherstellung ein Risiko der Partikelerzeugung im Rohrinneren dar.

Derartige Entlüftungsöffnungen ermöglichen somit zwar die Weiterverarbeitung der Rohre ohne den negativen Einfluss eines Unterdrucks im Rohr, können aber den Nachteil haben, dass die anfängliche Partikelfreiheit des Rohrinneren nicht gesichert ist und somit ein Partikeleintrag nicht vollständig vermieden werden kann.

Es besteht folglich die Gefahr einer Glaspartikelbildung bei der Herstellung einer Entlüftungsöffnung selbst als auch die Gefahr eines Eindringens von Partikeln verschiedener Art durch eine solche Entlüftungsöffnung.

Generelle Beschreibung der Erfindung

Die Erfindung hat sich daher die Aufgabe gestellt, ein Verfahren zur Herstellung eines Glashohlkörpers mit einem Druckausgleichsystem bereitzustellen und einen Glashohlkörper mit einem Druckausgleichsystem und mit zumindest reduzierter Partikelbelastung oder sogar ohne Partikelbelastung anzugeben. Es soll somit der Nachteil vermieden werden, dass bei der Herstellung des Glashohlkörpers und des Druckausgleichsystems selbst Partikel oder Splitter erzeugt werden und dass Partikel oder Splitter durch das Druckausgleichsystem an sich in das Körperinnere des Hohlkörpers eindringen können. Folglich sollen beide Partikelquellen zuverlässig ausgeschlossen werden.

Dies ist insbesondere bedeutsam für das Herstellungsverfahren von Primärpackmitteln für pharmazeutische Produkte als auch für Primärpackmittel für pharmazeutische Produkte an sich.

Die gestellte Aufgabe wird durch den Gegenstand der unabhängigen Ansprüche gelöst. Die abhängigen Ansprüche beinhalten Ausgestaltungen und Weiterentwicklungen der Erfindung.

Dazu weist das erfindungsgemäße Verfahren zur Herstellung eines Glashohlkörperprodukts folgende Schritte auf:

- Bereitstellen eines Glashohlkörpers mit einer Wandung und mit einer Außenoberfläche,

  - Formen des Glashohlkörperprodukts mit einem ersten Endbereich und einem zweiten Endbereich, wobei der erste Endbereich mit einem ersten Boden und der zweite Endbereich mit einem zweiten Boden verschlossen sind und

- Laser-basiertes Bestrahlen des Glashohlkörpers mit fokussierter Laserstrahlung zur Erzeugung von mehreren voneinander beabstandeten filamentartigen Schädigungen in einer vorbestimmten Anordnung auf der Außenoberfläche zumindest in dem ersten Endbereich, wobei zumindest durch einen Teil der filamentartigen Schädigungen mehrere das Innere des Glashohlkörpers mit der Außenoberfläche verbindende offene Kanäle gebildet werden, wobei der Durchmesser der Kanäle auf größer als 0 bis kleiner als 50 Mikrometer eingestellt wird und durch mehrere der offenen Kanäle eine gasdurchlässige Verbindung in das Innere hergestellt wird.

Das Verschließen der Enden zur Formung des Glashohlkörperprodukts kann dabei sowohl vor, als auch nach dem Einfügen der Kanäle mit dem Laser erfolgen. Auch kann ein Ende vor dem Einfügen der Kanäle und das andere Ende nach dem Einfügen der Kanäle verschlossen werden.

Mit dem Verfahren lässt sich also durch die Einfügung einer hinreichenden Anzahl von Kanälen eine hinreichend große Querschnittsfläche für eine Entlüftung und/oder einen Druckausgleich herstellen.

Das erfindungsgemäße Glashohlkörperprodukt umfasst dementsprechend einen Glashohlkörper mit einer Außenoberfläche, die einen ersten Endbereich und einen zweiten Endbereich aufweist, wobei die Endbereiche jeweils mit einem Boden verschlossen, der erste Endbereich also mit einem ersten Boden und der zweite Endbereich mit einem zweiten Boden verschlossen sind, wobei auf der Außenoberfläche mehrere voneinander beabstandete filamentartige Schädigungen angeordnet sind und zumindest ein Teil der Schädigungen das Innere des Glashohlkörpers mit der Außenoberfläche verbindende offene Kanäle bilden. Der Durchmesser jedes einzelnen Kanals liegt im Mikrometer-Bereich und mehrere im Mikrometer-Bereich eingestellte offene Kanäle bilden eine hinreichend große Querschnittsfläche für eine Entlüftung und/oder einen Druckausgleich, bei dem die filamentartigen Schädigungen und/oder die offenen Kanäle in Mindest-Abständen von mindestens 7 Mikrometern und besonders bevorzugt von mindestens 10 Mikrometern über den Umfang der Außenoberfläche des Glashohlkörpers angeordnet. Typischerweise ist das Glashohlkörperprodukt rohrförmig, hat dann also die Gestalt eines an beiden Enden geschlossenen Rohres.

Durch die Herstellung beziehungsweise das Vorliegen einer hinreichend großen Querschnittsfläche für eine Entlüftung oder einen Druckausgleich durch mehrere im Mikrometer-Bereich eingestellte offene Kanäle oder eine Vielzahl von im Mikrometer-Bereich eingestellten offenen Kanälen wird der Aufbau oder die Aufrechterhaltung eines unerwünschten Druckunterschieds zwischen dem Inneren und der Umgebung des Glashohlkörpers, insbesondere eines Unterdrucks im Inneren des Glashohlkörpers verhindert.

Die notwendige Anzahl der durch die filamentartigen Schädigungen gebildeten offenen Kanäle kann der Fachmann aus dem Öffnungsquerschnitt bzw. Durchmesser eines offenen Kanals und der Größe der Druckausgleichsgeschwindigkeit, die abhängig von der Anwendung ist, ermitteln. Für den Druckausgleich während des Abkühlens und Transports eines Glashohlkörpers über mehrere Stunden reichen normalerweise somit kleinere offene Kanäle.

Aufgrund der geringen Größe jedes offenen Kanals kann die Erzeugung von Partikeln, insbesondere solcher mit einer kritischen Größe zum Eindringen, verhindert werden. Durch den geringen Durchmesser der offenen Kanäle können keine Partikel, die größer als der Durchmesser der Kanäle sind, in das Innere des Glashohlkörpers gelangen. Der Durchmesser eines einzelnen offenen Kanals fungiert somit als Barriere für größere Partikel.

Insbesondere bei der Herstellung von pharmazeutischen Primärpackmitteln werden Glaspartikel bis zu einer Größe von ungefähr 50 Mikrometern als unschädlich betrachtet.

Je nach Einsatzgebiet des Glashohlkörperprodukts kann der Durchmesser jedes einzelnen Kanals daher auf größer als 0 bis kleiner als 50 Mikrometer eingestellt werden beziehungsweise sein. Der Durchmesser ist dabei als mittlere Weite des Kanals zu verstehen, da der Querschnitt weder streng kreisförmig, noch entlang des Kanals gleichbleibend groß sein muss.

Besonders bevorzugt wird der Durchmesser jedes einzelnen Kanals auf größer als 0 Mikrometer bis kleiner als 3 Mikrometer, weiter bevorzugt auf 1 Mikrometer bis kleiner als 3 Mikrometer eingestellt, so dass die Durchmesser der offenen Kanäle in dem Glashohlkörperprodukt bevorzugt in den genannten Bereichen liegen.

Damit stellen die im Mikrometer-Bereich eingestellten bzw. vorliegenden offenen Kanäle Entlüftungsöffnungen und somit ein Druckausgleichsystem dar, durch die bzw. das ein unerwünschter Unterdruckaufbau im Inneren des Glashohlkörpers verhindert werden kann.

In vorteilhafter Ausgestaltung weisen die offenen Kanäle insgesamt einen Gasströmungswiderstand auf, der so hoch ist, dass bei einer Druckdifferenz von 1 Bar zwischen dem Inneren des Glashohlkörperprodukts und der Umgebung des Glashohlkörperprodukts der Volumenstrom für Luft kleiner ist als $2*10^{-2}$ Liter/s.

Mit dem Gesetz von Hagen-Poiseuille wird der Volumenstrom pro Zeiteinheit bei einer laminaren Strömung eines homogenen Newtonschen Fluids, wie zum Beispiel Luft, durch ein Rohr mit dem Radius r und der Länge l beschrieben:

$$V = \frac{dV}{dt} = \frac{\pi\, r4}{8\,\eta}\,\frac{d\rho}{l}$$

$\eta$ = dynamische Viskosität des Fluids, $d\rho$ = Druckdifferenz zwischen Anfang und Ende des Kanals)

Die maßgebliche Länge l ist dabei durch die Wandstärke des Glaskörperhohlprodukts 1 gegeben, der Rohrdurchmesser ist der Durchmesser des mit dem Laser eingefügten Kanals.

Wie das Gesetz von Hagen-Poiseuille zeigt, nimmt der Volumenstrom mit dem Radius r des Loches bzw. des offenen Kanals mit dem Exponenten 4 besonders stark zu. Durch die einzelnen Kanäle wird dementsprechend ein langsamer Gasaustausch bewirkt.

Durch Laser-basiertes Bestrahlen des Glashohlkörpers werden die Kanäle gebildet und deren Durchmesser eingestellt. Besonders kleine Durchmesser werden bevorzugt mittels eines Ultrakurzpulslasers hergestellt, vorzugsweise mit Laserimpulsen einer Impulslänge von weniger als 10 Pikosekunden und/oder bevorzugt mit einer Pulsfrequenz von größer 100 kHz.

Somit werden eine zumindest sehr geringe Partikelbelastung oder sogar eine komplette Partikelfreiheit und damit eine weitgehende Verschmutzungsfreiheit im Inneren des Glashohlkörpers gewährleistet. Dies ist vorzugsweise für die Verwendung im pharmazeutischen Bereich, insbesondere als Pharmabehältnis, sehr bedeutsam.

Folglich können selbst zukünftige Anforderungen der Pharmaindustrie für die Entlüftungslochherstellung und den Druckausgleich inklusive Partikelbarriere während des Transports und der Lagerung erfüllt werden, dadurch, dass unterbunden wird, dass bei der Entlüftungslochherstellung Partikel erzeugt werden und dass Partikel aus der Umgebung ab einer bestimmten Größe, zum Beispiel gleich oder größer als 50 Mikrometer, in einen Glasbehälter eindringen können.

Damit werden beide Partikelquellen zuverlässig ausgeschlossen.

Dadurch, dass der erste Endbereich und der zweite Endbereich der Außenoberfläche des Glashohlkörpers mit jeweils einem Boden verschlossen sind, liegt ein kompletter Verschluss des Glashohlkörpers vor, so dass beim Verfahren zur Herstellung des Glaskörperprodukts als auch beim Transport oder der Lagerung dessen Partikel- und Verschmutzungsfreiheit konserviert wird.

Somit wird bei der erfindungsgemäßen Herstellung von Glashohlkörperprodukten mit der Erzeugung und Anordnung der offenen Kanäle mit Querschnitten im Mikrometer-Bereich, die als Entlüftungsöffnungen fungieren, ein Druckausgleich gewährleistet und zugleich das Eindringen von unerwünschten Partikeln und damit eine Kontamination mit diesen im Inneren des Glashohlkörpers zuverlässig ausgeschlossen.

Sowohl mit dem erfindungsgemäßen Verfahren als auch mit dem erfindungsgemäßen Glashohlkörperprodukt können ein Druckausgleich und eine Partikelbarriere gewährleistet werden, was insbesondere während des Transports und der Lagerung der Glashohlkörper von besonderer Bedeutung ist.

Um einen Bruch oder eine Trennung des Glashohlkörpers bzw. des Glases zu verhindern, werden die filamentartigen Schädigungen oder die offenen Kanäle auch abhängig von der Dicke und der Zusammensetzung des Glases in entsprechend großen Mindest-Abständen angeordnet.

Um die mechanische Festigkeit des Glashohlkörpers zu gewährleisten, insbesondere während des Handlings und des Transports beispielsweise von Glasrohren, Glasrohrfläschchen, Glasampullen, Glaskarpulen oder Glasspritzen im Pharmabereich, werden bzw. sind die filamentartigen Schädigungen und/oder die offenen Kanäle gemäß der Erfindung in Mindest-Abständen von mindestens 7 Mikrometern und besonders bevorzugt von mindestens 10 Mikrometern über den Umfang der Außenoberfläche des Glashohlkörpers angeordnet. Dieser Abstand wird dabei von Mitte zu Mitte der Kanäle gemessen.

Eine Vorrichtung zur Herstellung von Glashohlkörperprodukten nach dem erfindungsgemäßen Verfahren umfasst vorzugsweise

- eine Transporteinrichtung für den Glashohlkörper mit einer Außenoberfläche, die einen ersten Endbereich und einen zweiten Endbereich aufweist,

  - eine Laser-basierte Bestrahlungseinrichtung zur Erzeugung von fokussierter Strahlung mittels einer Fokussieroptik und eine Einrichtung, um die fokussierte Laserstrahlung über die Außenoberfläche zu führen und die mehreren voneinander beabstandeten filamentartigen Schädigungen in einer vorbestimmten Anordnung auf der Außenoberfläche zumindest im ersten Endbereich des Glashohlkörpers zu erzeugen, um zumindest durch einen Teil der Schädigungen mehrere das Innere des Glashohlkörpers mit der Außenoberfläche verbindende offene Kanäle zu bilden, um den Durchmesser jedes einzelnen Kanals im Mikrometer-Bereich einzustellen und um durch mehrere offene Kanäle, deren Durchmesser bei größer als 0 bis kleiner als 50 Mikrometer liegt, eine gasdurchlässige Verbindung in das Innere herzustellen, insbesondere eine hinreichend große Querschnittsfläche für eine Entlüftung und/oder einen Druckausgleich herzustellen, sowie eine thermische Verschließeinrichtung zum Heißumformen des Glashohlkörpers derart, dass ein Glashohlkörperprodukt mit zwei verschlossenen Enden erzeugt wird.

Gegebenenfalls kann eine separate Abtransporteinrichtung für den mit den offenen Kanälen versehenen Glashohlkörper vorgesehen sein, oder der Abtransport oder Weitertransport wird auch von der Transporteinrichtung vorgenommen.

Die Laser-basierte Bestrahlungseinrichtung umfasst einen Laser mit der vorgeschalteten Fokussieroptik und die Führungseinrichtung, um die Fokussieroptik stabil entlang einer gewünschten Anordnung, in gewünschtem Abstand und in gewünschtem Bestrahlungswinkel zur Außenoberfläche des Glashohlkörpers stabil zu führen und zu positionieren. Das bedeutet, dass dadurch die Optik beweglich ist, um die Laserstrahlung bzw. den Laserstrahl fokussiert zu bewegen und zu führen, so dass der jeweilige Auftreffpunkt des Laserstrahls des Lasers auf der Außenoberfläche des zu bearbeitenden Glashohlkörpers genau zu bestimmen sind.

Der optimale Bestrahlungswinkel hängt auch von der Dicke und/oder von dem Durchmesser des Glashohlkörpers und den optischen Eigenschaften des Materials ab. Der jeweils günstigste Wert wird durch Tests oder Berechnungen ermittelt.

In einer Ausgestaltung des Verfahrens zur Herstellung von Glashohlkörperprodukten wird der Erzeugung der filamentartigen Schädigungen auf der Außenoberfläche des Glashohlkörpers vorzugsweise ein Prozess eines bevorzugt kontinuierlichen wärmeweichen Trennens des Glashohlkörpers in vorbestimmte Abschnitte vorgeschaltet oder nachgeschaltet, wobei die Abschnitte des Glashohlkörpers jeweils einen ersten Endbereich und einen zweiten Endbereich aufweisen, und wobei der erste Endbereich und der zweite Endbereich jeweils unter Bildung eines Bodens verschlossen werden.

Bevorzugt wird das Trennen des Glashohlkörpers in vorbestimmte Abschnitte durch ein kontinuierliches wärmeweiches Trennen durchgeführt, wobei vorzugsweise verschlossene Glashohlkörperprodukte erhalten werden, ohne oder bereits mit Entlüftung.

Für die Erweiterung des Verfahrens um das wärmeweiche Trennen des Glashohlkörpers in vorbestimmte Abschnitte wird die zuvor genannte Vorrichtung bevorzugt ebenfalls wie folgt ergänzt.

Die erweiterte Vorrichtung umfasst bevorzugt eine als Trenn- und Verschließeinrichtung ausgebildete thermische Verschließeinrichtung, um den Glashohlkörper wärmeweich in vorbestimmte Abschnitte zu trennen, die jeweils einen mit einem Boden verschlossenen ersten Endbereich und einem zweiten Endbereich aufweisen. Mit anderen Worten ist hier die thermische Verschließeinrichtung dazu ausgebildet, beim Verschließen gleichzeitig Abschnitte vom Glashohlkörper abzutrennen, welche dann das Glashohlkörperprodukt, insbesondere in Form eines beidseitig an den Enden geschlossenen Rohres bilden. Vorzugsweise hat das Glashohlkörperprodukt einen kreisförmigen Querschnitt, dies ist aber nicht zwingend. Denkbar sind unter anderem auch Rohre mit elliptischem oder polygonalem Querschnitt.

Durch das thermische oder wärmeweiche Trennen des Glashohlkörpers in Abschnitte kann auf einfache Weise ein Trennen frei von der Bildung von Splittern oder Glaspartikeln ermöglicht werden.

Somit werden auch bei diesem um das thermische Trennen ergänzten Verfahren zur Herstellung von Glashohlkörperprodukten die möglichen Quellen von unerwünschten Partikeln, das heißt sowohl deren Erzeugung im Rahmen des Herstellungsprozesses des Glashohlkörperprodukts als auch deren Eindringen in das Innere des Glashohlkörpers aus der Umgebung, ausgeschlossen.

Bei dem wärmeweichen Trennen wird der Glashohlkörper bevorzugt an einer vorbestimmten Trennlinie bis auf Temperaturen deutlich größer als die Transformationstemperatur des Glases erhitzt und die Trennung des Glashohlkörpers in die vorbestimmten Abschnitte entweder durch Vergrößerung des Abstands benachbarter Abschnitte und Abziehen mit Verjüngung der erhitzten Trennlinie bis zum Abriss in der Mitte des Glashohlkörpers durchgeführt mit der Bildung von zwei vorbestimmten Abschnitten, wobei die Abschnitte jeweils einen ersten Endbereich und einen zweiten Endbereich aufweisen, und wobei der erste Endbereich und der zweite Endbereich jeweils unter Bildung eines Bodens verschlossen werden unter Einfluss der Oberflächenspannung des Glases.

Alternativ kann die erhitzte Trennlinie des Glashohlkörpers durch einen Scherenschnitt mit der Bildung von zwei vorbestimmten Abschnitten getrennt werden, wobei die Abschnitte jeweils einen ersten Endbereich und einen zweiten Endbereich aufweisen, und wobei der erste Endbereich und der zweite Endbereich jeweils unter Bildung eines Bodens verschlossen werden unter Einfluss der Oberflächenspannung des Glases.

In beiden Fällen werden durch den kontinuierlichen Trennprozess komplett geschlossene Glashohlkörper erzeugt, wobei die Innenoberfläche partikelfrei bleibt.

Durch die vorgenannten Maßnahmen wird erreicht, dass selbst bei Vorliegen von Partikeln die Partikelgrößen im Inneren des Glashohlkörperprodukts vorzugsweise die Partikelgrößen kleiner als 50 $\mu$m, bevorzugt kleiner als 25 $\mu$m und besonders bevorzugt kleiner als 10 $\mu$m betragen. Damit kann beispielweise auch eine geringe Kontamination oder sogar ein Ausschluss einer Kontamination durch Mikroorganismen erzielt werden.

In einer vorteilhaften Ausführung des Verfahrens zur Herstellung eines Glashohlkörperprodukts, insbesondere eines pharmazeutischen Primärpackmittels, kann durch einen Teil der filamentartigen Schädigungen und/oder der offenen Kanäle eine individuelle Codierung des Glashohlkörpers gebildet werden mit einer frei wählbaren geometrischen Anordnung der Schädigungen und/oder der offenen Kanäle in Form von Quadraten, Rechtecken, Parallelogrammen, Kreisen, Ellipsen, gemischten Formen davon oder 2D-Codierungen, wie etwa Varianten von Data-Matrix-Codes. Allgemein ist daher in einer Weiterbildung vorgesehen, dass die Anordnung der Kanäle oder filamentförmigen Schädigungen eine codierte Information enthält, beziehungsweise, dass die Kanäle so eingefügt werden, dass in deren Positionierung auf dem Glaskörperhohlprodukt eine Information codiert ist. Diese Information kann technische Daten des Glaskörperhohlprodukts enthalten, wie etwa den Glastyp, Abmessungen oder das Herstellungsdatum, sowie gegebenenfalls auch Hinweise auf Defekte im Glas, hier insbesondere deren Ort.

In einem erfindungsgemäßen Glashohlkörperprodukt mit Druckausgleichsystem können somit die offenen Kanäle, die bevorzugt in einer frei wählbaren geometrischen Anordnung vorliegen, wie in Form von Quadraten, Rechtecken, Parallelogrammen, Kreisen, Ellipsen oder in gemischten Formen, oder in Varianten von Data-Matrix-Codes, gleichzeitig eine individuelle Codierung des Glashohlkörpers darstellen oder additiv zusätzliche filamentartigen Schädigungen mit einer individuelle Codierung des Glashohlkörpers bilden.

In einer bevorzugten Ausgestaltung des Verfahrens wird durch zumindest einen Teil der filamentartigen Schädigungen und/oder der offenen Kanäle eine allgemeine oder individuelle Codierung von Daten zum Glashohlkörper gebildet. In einer bevorzugten Ausgestaltung des Glashohlkörperprodukts bildet mindestens ein Teil der filamentartigen Schädigungen und/oder der offenen Kanäle mit einer frei wählbaren geometrischen Anordnung eine allgemeine oder individuelle Codierung des Glashohlkörpers, die Informationen zu Prozessparametern, zur Produktspezifikation, zur Fehlerart und/oder zur Fehlerposition enthält oder angibt. Damit können wichtige Informationen über die Herkunft, Originalität, Herstellung, spezifische Produktionsdaten des Glashohlkörpers oder des Glashohlkörperprodukts und technische Daten zu Abmessungen und Glastyp erhalten werden, insbesondere für die Rückverfolgung, die Weiterverarbeitung, die Feststellung der Originalität, für die Qualitätskontrolle und Qualitätsverbesserung, Fälschungssicherheit und/oder auch zur Bekämpfung der Produktpiraterie.

Ferner kann das Verfahren zur Herstellung von Glashohlkörperprodukten auch derart ausgestaltet werden, dass insbesondere für eine Weiterverarbeitung, durch zumindest einen Teil der filamentartigen Schädigungen und/oder der offenen Kanäle eine Sollbruchlinie für ein nachgeschaltetes Trennen des Glashohlkörpers in vorbestimmte Abschnitte gebildet wird, wodurch ebenfalls ein splitterarmes und präzises Trennen des Glashohlkörpers ermöglicht wird.

Ein ähnliches Verfahren zum Abtrennen eines Teilstücks von einem flächigen Glaselement entlang einer vorgesehenen Trennlinie, welche das Glaselement in ein abzutrennendes Teilstück und einen zu verbleibenden Hauptteil einteilt, wobei nebeneinander entlang der Trennlinie filamentförmige Schädigungen im Volumen des Glaselements erzeugt werden, ist in der WO 2017009149 A1 beschrieben.

Ein Vorteil dieses Verfahrens ist die hohe Stabilität der auf diese Weise erzeugten Sollbruchlinie, die zeitlich stabil ist und somit ohne Bruchwachstum auch moderate mechanische Belastungen beim Transport und der Weiterverarbeitung toleriert.

Üblicherweise wird die Trennung entlang der Sollbruchlinie mit thermischen Spannungen, zum Beispiel durch lokales Aufheizen mit einem Brenner oder bevorzugt mit einer $CO_2$-Laserbestrahlung, oder durch mechanische Spannungen durchgeführt.

Aus der Literatur ist bekannt, dass Trennungsprozesse dieser Art splitterarm ausgeführt werden können. Durch die Verwendung eines Lasers ist der Prozess auch reinraumkompatibel.

Diese Trennung oder dieser Bruch kann sowohl bei der Endbearbeitung des Hohlkörperherstellers als auch bei der Weiterverarbeitung des Hohlkörpers beim Kunden ausgeführt werden.

Somit können die Anforderungen der Pharmaindustrie erfüllt werden, dass keine schädlichen Partikel, insbesondere solche, die durch den Querschnitt der offenen Kanäle passen, und/oder zu unerwünschten Verunreinigungen des Inneren des Glashohlkörpers führen, erzeugt werden und dass zugleich keine Partikel durch die Entlüftungsöffnungen und/oder Druckausgleichöffnungen ins Innere des Glashohlkörpers gelangen können. die Partikelgrößen kleiner als 50 µm, bevorzugt kleiner als 25 µm und besonders bevorzugt kleiner als 10 µm betragen.

Die Erfindung betrifft auch die Verwendung von nach der Erfindung hergestellten Glashohlkörperprodukten und von erfindungsgemäßen Glashohlkörperprodukten als Pharmaverpackungen oder Primärpackmittel für pharmazeutische Produkte, oder deren Herstellung aus erfindungsgemäßen Glashohlkörperprodukten, beispielsweise zur Herstellung von Glasrohrfläschchen, Glasampullen, Glaskarpulen oder Glasspritzen.

### Kurzbeschreibung der Zeichnungen

Die Erfindung wird nachfolgend anhand der beigeschlossenen Figuren genauer erläutert.

In den Figuren bezeichnen gleiche Bezugszeichen jeweils gleiche oder entsprechende Elemente. Es zeigen:

Fig. 1 ein Schema einer Vorrichtung zur Herstellung von einem Glashohlkörperprodukt mit filamentartigen Schädigungen und offenen Kanälen;

Fig. 2 eine schematische Zeichnung eines erfindungsgemäßen Glashohlkörperprodukts mit eingefügten offenen Kanälen für eine Entlüftung und/oder einen Druckausgleich, die gleichzeitig eine individuelle Codierung darstellen können;

Fig. 3 eine schematische Zeichnung eines Glashohlkörperprodukts mit eingefügten offenen Kanälen für eine Entlüftung und/oder einen Druckausgleich sowie mit filamentartigen Schädigungen als Sollbruchlinie;

Fig. 4 ein Schema einer erfindungsgemäßen Vorrichtung mit einer Einrichtung zur Formung von Hohlglas,

Fig. 5 ein Glashohlkörperprodukt mit entlang einer ringförmigen Linie angeordneten filamentförmigen Schädigungen,

Fig. 6 das Glashohlkörperprodukt nach Fig. 5 mit einem an der ringförmigen Linie herausgelösten Teil der Wandung,

Fig. 7 eine Vorrichtung zur Weiterverarbeitung von Glashohlkörperprodukten,

Fig. 8 eine Anordnung von offenen Kanälen in Form eines 2D-Codes.

### Detaillierte Beschreibung der Erfindung

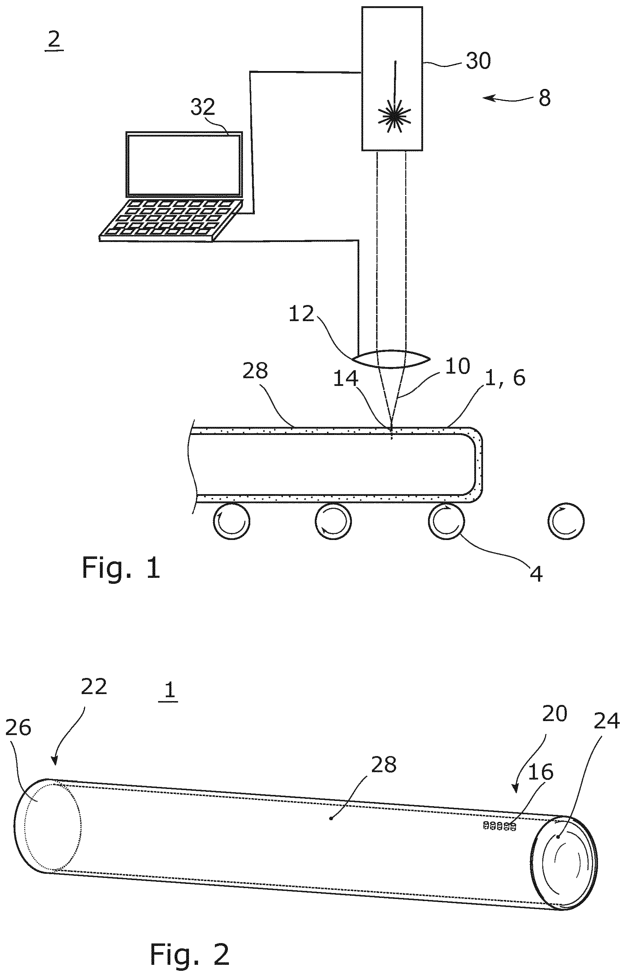

In Fig. 1 ist ein Ausführungsbeispiel für eine Vorrichtung 2 zur Herstellung von einem Glashohlkörperprodukt 1 gezeigt, die eine Transporteinrichtung 4 für einen Glashohlkörper 6, eine Laser-basierte Bestrahlungseinrichtung 8 mit einem Ultrakurzpulslaser 30 zur Erzeugung von fokussierter Laserstrahlung 10 mittels einer Fokussieroptik 12, um in den Glashohlkörper 6 mehrere voneinander beabstandete filamentartigen Schädigungen 14 einzubringen, die mindestens teilweise offene Kanäle 16 bilden und eine optionale, nicht dargestellte Führungseinrichtung, um die Fokussieroptik 12 zu führen, umfasst.

Die Transporteinrichtung 4 kann eine Zug- oder Zieheinrichtung sein kann. Sie kann dazu beschaffen sein, den Glashohlkörper 6 schubweise (diskontinuierlich) oder kontinuierlich in die Richtung der Längsachse oder senkrecht dazu translatorisch zu bewegen. Gleichzeitig kann bevorzugt auch eine Rotation des Glashohlkörpers 6, insbesondere des Glasrohres, erfolgen. Die Transporteinrichtung 4 kann daher auch eine Positionierungseinrichtung sein, um den Glashohlkörper 6 unter der Laserstrahlung 10 zu positionieren, beziehungsweise Bestandteil der Einrichtung sein, um die fokussierte Laserstrahlung 10 über die Außenoberfläche 28 zu führen und auf diese Weise mehrere beabstandete offene Kanäle zu erzeugen.

Die Vorrichtung 2 kann auch einen Teil einer nicht dargestellten Glashohlkörper-Erzeugungseinrichtung oder Formgebungseinrichtung, beispielsweise für ein Glasrohr, darstellen, wobei die Transporteinrichtung 4 den Glashohlkörper 6 der Laser-basierten Bestrahlungseinrichtung 8, gegebenenfalls noch im heißen Zustand, zuführt.

Wenn an einem bewegten Glas gearbeitet werden soll, etwa wenn der Prozess an einem kontinuierlich, rohrförmig hergestellten Glashohlkörper 6 direkt am Zug aus der Schmelze oder nach teilweisem Aufschmelzen eines Glashohlkörpers 6 durchgeführt werden soll, dann wird bevorzugt, die Laser-basierte Bestrahlungseinrichtung 8 und die nicht dargestellte Führungseinrichtung, um die Fokussieroptik 12 zu führen, mitlaufend zur Transportrichtung des Glashohlkörpers ausgebildet.

Auf diese Weise können während des Mitlaufs die filamentartigen Schädigungen 14 und/oder die offenen Kanäle 16 in der gewünschten Anordnung erzeugt werden.

In einer besonderen Ausgestaltung der Vorrichtung 2 zur Herstellung von Glashohlkörperprodukten 1 kann die Vorrichtung 2 eine in Fig. 1 nicht dargestellte vorgelagerte thermische Trenn- und Verschließeinrichtung oder eine der Laser-basierten Bestrahlungseinrichtung 8 nachgelagerte thermische Trenn- und Verschließeinrichtung umfassen, wobei die thermische Trenn- und Verschließeinrichtung den Glashohlkörper 6 wärmeweich in vorbestimmte Abschnitte, die jeweils einen ersten Endbereich 20 und einen zweiten Endbereich 22 aufweisen, trennt und den ersten Endbereich 20 unter Bildung eines ersten Bodens 24 und den zweiten Endbereich 22 unter Bildung eines zweiten Bodens 26 verschließt. Beim Verschließen im Heißformprozess kann sich ein Druckunterschied vom Inneren des Glashohlkörpers 6 zur Umgebung aufbauen. Dieser kann sich durch die mit der Laser-basierten Bestrahlungseinrichtung 8 eingefügten offenen Kanäle 16 bis zu einem späteren Zerteilen des Glashohlkörperprodukts 6 wieder ausgleichen.

Mit der Laser-basierten Bestrahlungseinrichtung 8 können in den Glashohlkörper 6 mehrere voneinander beabstandete filamentartigen Schädigungen 14 eingefügt werden, um zumindest durch einen Teil der Schädigungen 14 mehrere das Innere des Glashohlkörpers 6 mit seiner Außenoberfläche 28 verbindende offene Kanäle 16 zu bilden.

Die Laser-basierte Bestrahlungseinrichtung 8 umfasst einen Ultrakurzpulslaser 30 mit der vorgeschalteten Fokussieroptik 12 und gegebenenfalls eine Führungseinrichtung, um die Fokussieroptik 12 stabil entlang einer gewünschten Anordnung, in gewünschtem Abstand und in gewünschtem Bestrahlungswinkel zur Außenoberfläche 28 des Glashohlkörpers 6 stabil zu führen, um den Laserstrahl 10 korrekt zu fokussieren und zu positionieren. Das bedeutet, dass dadurch die Optik 12 beweglich sein kann, um die Laserstrahlung 10 bzw. den Laserstrahl fokussiert zu bewegen und zu führen, so dass der jeweilige Auftreffpunkt des Laserstrahls des Ultrakurzpulslasers 30 auf der Außenoberfläche 28 der Wandung 27 des zu bearbeitenden Glashohlkörpers 6 genau zu bestimmen sind. In diesem Fall ist die Führungseinrichtung demgemäß Bestandteil der Einrichtung, um die fokussierte Laserstrahlung 10 über die Außenoberfläche 28 zu führen, um die mehreren voneinander beabstandeten filamentartigen Schädigungen 14 in einer vorbestimmten Anordnung auf der Außenoberfläche 28 zumindest im ersten Endbereich 20 des Glashohlkörpers 6 zu erzeugen,

Der optimale Bestrahlungswinkel hängt auch von der Dicke der Wandung 27 und/oder von dem Durchmesser des Glashohlkörpers 6 und den optischen Eigenschaften des Materials ab. Der jeweils günstigste Wert wird durch Tests oder Berechnungen ermittelt. Beispielsweise sind für Rohre mit größerem Durchmesser kleinere Winkel und für Rohre mit kleinerem Durchmesser größere Winkel vorteilhafter.

Ein geeigneter Ultrakurzpulslaser 30 für die Vorrichtung 2 zur Herstellung eines Glashohlkörperprodukts 1 ist ein Neodym-dotierter Yttrium-Aluminium-Granat-Laser mit einer Wellenlänge von 1064 Nanometern, der auch frequenzverdoppelt arbeiten kann. Dabei ist die geeignete Pulsdauer eines Laserpulses bevorzugt kürzer als 10 Pikosekunden. Die Pulsfrequenz beträgt bevorzugt mehr als 100 kHz.

Vorzugsweise wird die Steuerung des Ultrakurzpulslasers 30 und der nicht dargestellten Führungseinrichtung für die Fokussieroptik 12 sowie optional auch die Steuerung der Transporteinrichtung 4 zur Positionierung des Glashohlkörpers 6 unter den Laserstrahl 10 mittels einer programmtechnisch eingerichteten Rechnereinrichtung 32 durchgeführt. Dies geschieht insbesondere durch Einlesen von Positionsdaten, vorzugsweise aus einer Datei oder über ein Netzwerk.

Auf diese Weise lassen sich mehrere voneinander beabstandete filamentartige Schädigungen 14 in einer vorbestimmten Anordnung auf der Außenoberfläche 28 erzeugen und das Innere des Glashohlkörpers 6 mit der Außenoberfläche 28 verbindende offene Kanäle 16 bilden, wobei der Durchmesser jedes einzelnen Kanals 16 im Mikrometer-Bereich, insbesondere mit einem Durchmesser von kleiner als 10 Mikrometer eingestellt wird und durch mehrere im Mikrometer-Bereich eingestellte offene Kanäle 16 eine hinreichend große Querschnittsfläche für eine Entlüftung und/oder einen Druckausgleich hergestellt wird.

Fig. 2 zeigt eine Aufsicht auf ein erfindungsgemäßes Glashohlkörperprodukt 1 mit eingefügten offenen Kanälen 16, die eine hinreichend große Querschnittsfläche für eine Entlüftung und/oder einen Druckausgleich bilden. Allgemein, ohne Beschränkung auf das dargestellte Beispiel sind die Kanäle 16 vorzugsweise nicht über das Glashohlkörperprodukt 1 verteilt, sondern in einer gruppenweisen Anordnung nahe beieinander eingefügt. Vorzugsweise beträgt dabei der Abstand der Kanäle 16 weniger als 1 Millimeter.

Das Glashohlkörperprodukt 1 weist auf der Außenoberfläche 28 den ersten Endbereich 20 und den zweiten Endbereich 22 auf, wobei der erste Endbereich 20 und der zweite Endbereich 22 mit dem ersten Boden 24 und dem zweiten Boden 26 verschlossen sind.

Um einen durch den Glashohlkörper 6 hindurchgehenden Kanal 16 herzustellen, eignet sich auch Glas mit einer Stärke der Wandung 27 von größer als 5 Millimetern, bevorzugt jedoch allgemein dünneres Glas.

Ohne Beschränkung auf die in den Figuren dargestellten Beispiele ist daher in Weiterbildung der Erfindung vorgesehen, dass das Glashohlkörperprodukt 1 eine Stärke der Wandung 27 von maximal 5 Millimeter aufweist. Für Pharmaanwendungen, insbesondere für Spritzen oder Karpulen, werden meistens Stärken der Wandung 27 von maximal 2,5 Millimeter eingesetzt.

Die Auswahl der Gläserzusammensetzung ist vielfältig, solange sie mit einem Laser bearbeitbar sind. Beispielsweise kommen dafür Borosilikatglas oder Aluminosilikatglas in Betracht.

Auf der Außenoberfläche 28, insbesondere im ersten Endbereich 20 des Glashohlkörpers 6, sind mehrere voneinander beabstandete das Innere des Glashohlkörpers 6 mit der Außenoberfläche 28 verbindende offene Kanäle 16 mit einem eingestellten Durchmesser jedes einzelnen Kanals 16 im Mikrometer-Bereich derart angeordnet, wie es durch die oben beschriebene Ansteuerung des Ultrakurzpulslasers 30 durch die Rechnereinrichtung 32 und die Ansteuerung der nicht dargestellten Führungseinrichtung für die Fokussieroptik 12 sowie optional auch die Ansteuerung der Transporteinrichtung 4 als Positioniereinrichtung des Glashohlkörpers 6 in die Außenoberfläche 28 des Glashohlkörpers 6 eingeschrieben werden kann.

Der Durchmesser jedes einzelnen Kanals 16 liegt vorzugsweise bei größer 0 bis kleiner als 10 Mikrometern. Besonders bevorzugt bei größer als 0 bis 3 Mikrometern und weiter bevorzugt bei 1 bis kleiner als 3 Mikrometern.

Durch mehrere im Mikrometer-Bereich eingestellte offene Kanäle 16 wird eine hinreichend große Querschnittsfläche für eine Entlüftung und/oder einen Druckausgleich erzielt und Aufbau eines unerwünschten Unterdrucks im Inneren des Glashohlkörpers 6 verhindert.

Die notwendige Anzahl der durch die filamentartigen Schädigungen gebildeten offenen Kanäle 16 kann der Fachmann aus dem Öffnungsquerschnitt bzw. Durchmesser eines offenen Kanals 16 und der Größe der Druckausgleichsgeschwindigkeit, die abhängig von der Anwendung ist, ermitteln. Für den Druckausgleich während des Abkühlens und Transports eines Glashohlkörpers über mehrere Stunden reichen somit kleinere offene Kanäle.

Aufgrund der geringen Größe jedes offenen Kanals 16 kann die Erzeugung von Partikeln, insbesondere solcher mit einer kritischen Größe zum Eindringen, verhindert werden. Durch den geringen Durchmesser der offenen Kanäle 16 können keine Partikel, die größer als der Durchmesser der Kanäle 16 sind, in das Innere des Glashohlkörpers 6 gelangen. Der Durchmesser eines einzelnen offenen Kanals 16 fungiert somit als Barriere für größere Partikel.

Um die mechanische Festigkeit des Glashohlkörpers 6 zu gewährleisten, und insbesondere während des Handlings und des Transports beispielsweise von Glasrohren, Glasrohrfläschchen, Glasampullen, Glaskarpulen oder Glasspritzen im Pharmabereich einen Bruch oder eine unerwünschte Trennung des Glashohlkörpers 6 zu verhindern, sind die filamentartigen Schädigungen 14 und/oder die offenen Kanäle 16 gemäß der Erfindung in Abständen von mindestens 7 Mikrometern und besonders bevorzugt von mindestens 10 Mikrometern über den Umfang der Außenoberfläche 28 des Glashohlkörpers 6 angeordnet. Diese Abstände werden dabei von Mitte zu Mitte der Kanäle gemessen.

In dem erfindungsgemäßen Glashohlkörperprodukt 1 mit Druckausgleichsystem können somit die offenen Kanäle 16, in einer frei wählbaren geometrischen Anordnung vorliegen, wie beispielsweise in Form eines Quadrats, wie in Fig. 2 gezeigt, und damit gleichzeitig eine individuelle Codierung des Glashohlkörperprodukts 1 darstellen.

Auch können filamentartigen Schädigungen 14 Defekte markieren und somit beispielsweise eine "Fehlerlandkarte" auf der Wandung 27 des Glashohlkörpers 6 bilden oder durch eine Anordnung der Kanäle 16 in Form eines Codes eine Information über den Ort von Defekten enthalten.

Neben Informationen zu Prozessparametern, zur Produktspezifikation, zur Fehlerart und/oder zur Fehlerposition können damit wichtige Informationen über die Herkunft, Originalität, Herstellung, spezifische Produktionsdaten des Glashohlkörpers 6 oder des Glashohlkörperprodukts 1 erhalten werden, insbesondere für die Rückverfolgung, die Weiterverarbeitung, die Feststellung der Originalität, für die Qualitätskontrolle und Qualitätsverbesserung, Fälschungssicherheit und/oder auch zur Bekämpfung der Produktpiraterie.

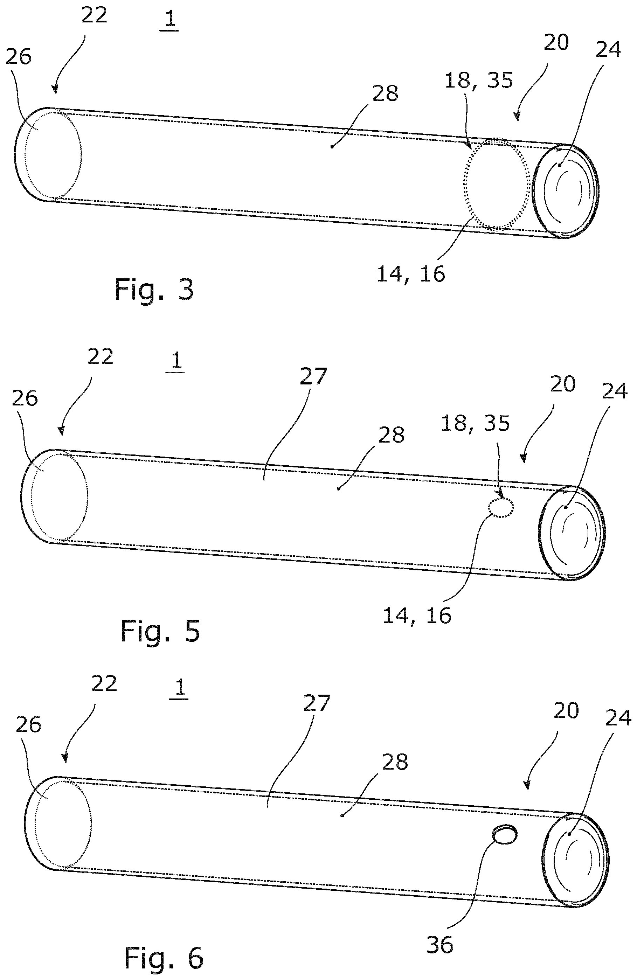

Fig. 3 zeigt eine Aufsicht auf ein Glashohlkörperprodukt 1 mit eingefügten offenen Kanälen 16 für eine Entlüftung und/oder einen Druckausgleich, beispielsweise in Form eines um den Umfang des rohrförmigen Glashohlkörperprodukts herumlaufenden Rings 18, als Sollbruchlinie 35 für ein nachgeschaltetes Trennen des Glashohlkörpers 6 entlang dieser ringförmigen Linie.

Alternativ oder kumulativ zur Trennung des Glashohlkörpers 6 in vorbestimmte Abschnitte an der Sollbruchlinie können die filamentartigen Schädigungen 14 und die offenen Kanäle 16 auch beispielsweise ringförmig lediglich zur Ausbildung einer Öffnung an der Wandung 27 an der Außenoberfläche 28 des Glashohlkörpers 6 angeordnet werden bzw. sein, vorzugsweise mit einem Gesamtdurchmesser der Öffnung im Bereich einiger oder weniger Millimeter, insbesondere als eine Entlüftungsöffnung.

Bei senkrechter Anordnung des Glashohlkörpers 6 in Form eines Rohrglases mit einer oben ausgerichteten Öffnung kann der Kamineffekt der vertikal nach oben gerichteten Luftströmung genutzt werden, um Luft durch die obere Öffnung abzuführen.

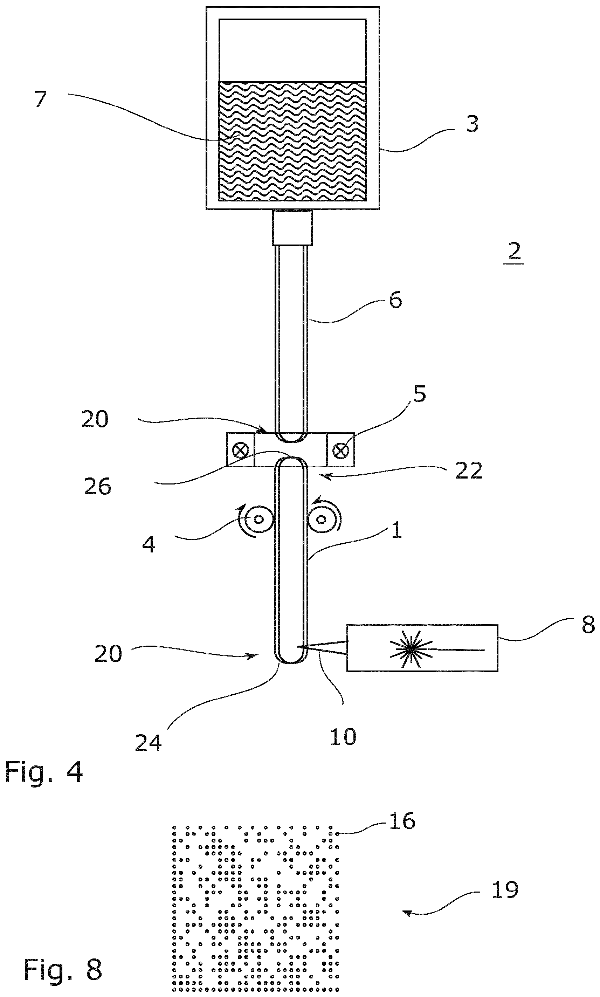

Die Vorrichtung und das Verfahren zur Herstellung von Glashohlkörperprodukten 1 können gemäß einer Ausführungsform der Erfindung insbesondere eine Einrichtung 3 zur Herstellung von Rohrglas umfassen. Fig. 4 zeigt schematisch eine solche Vorrichtung. Das mit der Einrichtung 3 aus einer Schmelze 7 geformte Rohrglas stellt den Glashohlkörper 6 dar, der mit der Vorrichtung 2 zu einem erfindungsgemäßen Glashohlkörperprodukt 1 weiterverarbeitet wird. Dazu wird das Rohrglas der thermischen Verschließeinrichtung 5 zugeführt. Diese erhitzt das Rohrglas ringförmig. Das Rohrglas schnürt sich durch das Erweichen ein und trennt sich, wobei sich die abgetrennten Enden gleichzeitig verschließen und die Böden 24, 26 ausbilden. Bei der dargestellten Ausführungsform ist die Laser-basierte Bestrahlungseinrichtung 8 der Verschließeinrichtung 5 nachgeordnet. Es ist aber ebenso möglich, die Kanäle 16 vor dem Trennen in Abschnitte einzufügen. Das so erhaltene rohrförmige Glashohlkörperprodukt hat in Weiterbildung allgemein einen Außendurchmesser im Bereich von 4 mm bis 120 mm, vorzugsweise im Bereich von 6 mm bis 30 mm. Bevorzugte Einzelwerte des Außendurchmesser sind dabei: 6,85 mm, 8,15 mm, 10,75 mm, 10,85 mm, 12,75 mm, 14,45 mm, 14,75 mm, 16 mm, 17,05 mm, 17,75 mm, 22 mm, 22,05 mm, 22, 5 mm, 24 mm, und 30 mm.

Die Länge liegt gemäß einer Ausführungsform im Bereich von 0,4 Meter bis 2,5 Meter, vorzugsweise im Bereich von 1,2 Meter bis 1,8 Meter. Ein bevorzugtes Maß ist eine Länge von 1,5 Metern.

Typische und bevorzugte Wandstärken liegen im Bereich von 0,1 mm bis 2,5 mm. Bevorzugte dabei sind Wandstärken im Bereich von 0,4 mm bis 16 mm. Derartige Glashohlkörperprodukte eignen sich besonders zur Weiterverarbeitung hohler Glaserzeugnisse, wie Spritzen, Ampullen und Glasfläschchen. Bevorzugte Einzelwerte der Wandstärke sind dabei: 0,5 mm, 0,55 mm, 0,6 mm, 0,7 mm, 0,9 mm, 1,1 mm, 1,3 mm, 1,4 mm und 1,5 mm.

Fig. 5 zeigt dazu ein Glashohlkörperprodukt 1 mit einer ringförmig auf der Mantelfläche des rohrförmigen Glashohlkörperprodukts 1 verlaufenden Sollbruchlinie 35 aus nebeneinanderliegenden Kanälen 16. Im Unterschied zu der in Fig. 3 gezeigten Ausführungsform teilt die Sollbruchlinie 35 hier das Glashohlkörperprodukt 1 nicht in zwei axiale Abschnitte, so dass beim Auftrennen eine Öffnung der Stirnfläche, beziehungsweise des Rohrendes erfolgt. Vielmehr liegt die entstehende Öffnung auf der Mantelfläche.

Fig. 6 zeigt das rohrförmige Glashohlkörperprodukt 1 nachdem durch das Ablösen des Teils der Wandung eine Öffnung 36 in der Mantelfläche eines rohrförmigen Glashohlkörperprodukts 1 erzeugt wurde. Die ringförmige Sollbruchlinie 35 ist nicht umlaufend um die Mantelfläche herum unter Aufteilung des Glashohlkörperprodukts 1 in zwei axiale Abschnitte, sondern zur Erzeugung einer Öffnung 36 in der Mantelfläche eingefügt Dementsprechend ist mindestens der Mittelpunkt der Öffnung 36 beabstandet zum nächstgelegenen Ende des rohrförmigen Glashohlkörperprodukts 1.

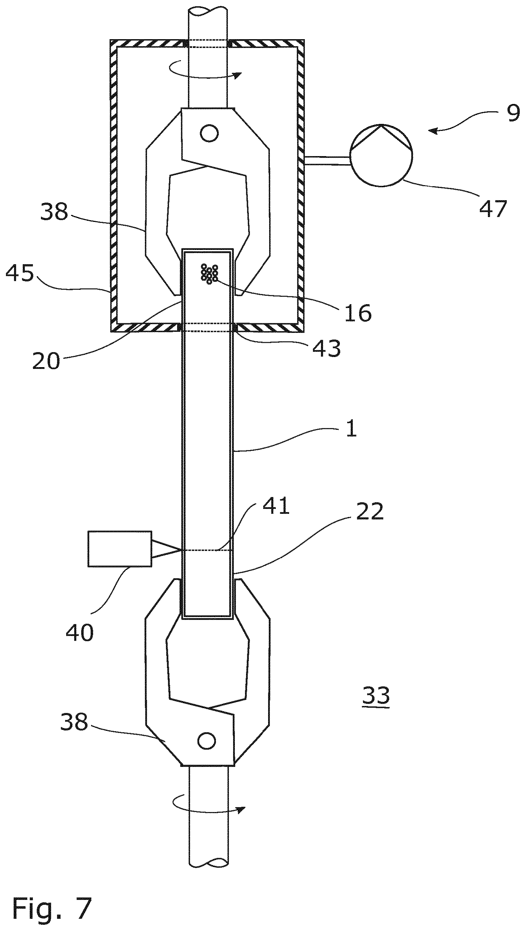

Fig. 7 zeigt eine Vorrichtung zur Weiterverarbeitung von Glashohlkörperprodukten 1, wie sie mit dem bisher beschriebenen Verfahren herstellbar sind. Die Weiterverarbeitung hat typischerweise die Herstellung hohler Glaserzeugnisse, wie Glasrohrfläschchen, Glasampullen, Glaskarpulen oder Glasspritzen zum Ziel. Diese Glaserzeugnisse werden im Allgemeinen aus kürzeren Abschnitten des Glashohlkörperprodukts 1 hergestellt. Zu Beginn der Weiterverarbeitung wird das Glashohlkörperprodukt 1 geöffnet. Dieses Öffnen kann durch einen kalten Prozess, wie insbesondere ein Ritzbrechen erfolgen. Dabei können allerdings Glassplitter in den Glashohlkörper gelangen. Um dies zu vermeiden, ist gemäß einer Ausführungsform der Erfindung, ohne Beschränkung auf das spezielle dargestellte Beispiel eine Vorrichtung und ein Verfahren vorgesehen, bei welchen das Glashohlkörperprodukt 1 zur Weiterverarbeitung aufgetrennt wird, wobei vor dem Auftrennen eine Druckdifferenz zwischen dem Inneren des Glashohlkörperprodukts 1 und dessen Umgebung hergestellt wird, so dass der Druck im Inneren höher als der Druck in der Umgebung ist, und wobei das Herstellen der Druckdifferenz durch einen Gasaustausch durch die offenen Kanäle 16 hindurch erfolgt, wobei beim Trennen entstehende Partikel durch den entweichenden Überdruck vom Glashohlkörper 6 weg befördert werden.

Zur Weiterverarbeitung kann das rohrförmige Glashohlkörperprodukt 1 in ein Futter 38 gespannt werden. Mit dem Futter 38 wird das Glashohlkörperprodukt 1 um seine Längsachse gedreht. Dabei fügt eine Ritzeinrichtung 40 eine im Umfangsrichtung des Glashohlkörperprodukts 1 umlaufende Ritzung 41 ein. Das Auftrennen an der Ritzung 41 zum Abtrennen des Endbereichs 22 kann beispielsweise durch einen seitlich auf das Glashohlkörperprodukt ausgeübten Impuls erfolgen. Jedenfalls können beim Abschlagen des Endbereichs durch das Reissen des Glases Glaspartikel entstehen, die dann auch in das Innere des Glashohlkörperprodukts gelangen und dort verbleiben. Diese Partikel finden sich dann eventuell auch in den aus dem Glashohlkörperprodukt hergestellten Erzeugnissen wieder. Um dies zu vermeiden, weist die Vorrichtung 33 zur Weiterverarbeitung von Glashohlkörperprodukten 1 gemäß einer Ausführungsform eine Differenzdruckvorrichtung 9 auf. Mit dieser wird eine Druckdifferenz aufgebaut, so dass der Druck im Inneren des Hohlkörpers größer ist, als der Umgebungsdruck der Umgebung am Ort der Ritzung 41. Die Differenzdruckvorrichtung 9 kann beispielsweise ein Gehäuse 45 mit einer Öffnung aufweisen, in welcher das Glashohlkörperprodukt 1 geführt ist. Die Öffnung ist mit einer Dichtung 43 abgedichtet. Im dargestellten Beispiel ist auch das Futter 38 in diesem Gehäuse angeordnet. Insbesondere ist aber der Bereich des Glashohlkörperprodukts 1 im Gehäuse 45 angeordnet, an welchem sich die offenen Kanäle 16 befinden. An das Gehäuse 45 ist schließlich eine Pumpe 47 angeschlossen, welche einen Überdruck im Gehäuse 45 erzeugt. Dadurch strömt Gas auch durch die Kanäle 16 in den Innenraum des Glaskörperhohlprodukts 1 und der Druck im Inneren gleicht sich dem Druck im Gehäuse 45 an. Wird nun der Endbereich 22 an der Ritzung 41 abgeschlagen, entweicht das unter Überdruck stehende Gas an der Bruchstelle und bläst dadurch entstehende Partikel weg.

Im Anschluss an das Öffnen des rohrförmigen Glashohlkörperprodukts können dann aus Abschnitten desselben durch Weiterverarbeitung, insbesondere unter Heißumformung hohle Glaserzeugnisse, wie Fläschchen, Ampullen oder Spritzen hergestellt werden.

Wie bereits dargelegt, kann in der lateralen Anordnung der offenen Kanäle 16 zusätzlich Information eingefügt werden. So ist in einer Ausführungsform allgemein vorgesehen, dass die Kanäle 16 so eingefügt werden, dass deren laterale Positionen einen 2D-Code, beispielsweise einen Datamatrix-Code bilden. Ein Beispiel dazu zeigt Fig. 8. Der 2D-Code 19 dieser Anordnung der Kanäle 16 ist im dargestellten Beispiel ein Datamatrix-Code. Im Code können verschiedene Angaben, etwa zu Glastyp und Abmessungen hinterlegt sein. Rein beispielhaft wurde im dargestellten Beispiel die Information eines Datums, des Glastyps (Borosilikatglas), des Außendurchmessers (30 mm) und der Länge des rohrförmigen Glashohlkörperprodukts 1 (1500 mm) gespeichert. Das Muster 19 kann auch als Justierung oder Halterungshilfe beim Einspannen in das Futter 38 einer Vorrichtung zur Weiterverarbeitung dienen. Um als Justierung oder Markierung zu dienen, muss die Anordnung der Kanäle 16 aber nicht notwendigerweise die Gestalt eines Codes haben. Gegebenenfalls ist hierzu bereits die Position der Kanäle auf dem Glashohlkörperprodukt 1 als Referenzposition ausreichend.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind.

Bezugszeichenliste

    1 Glashohlkörperprodukt
    2 Vorrichtung zur Herstellung eines Glashohlkörperprodukts 1
    3 Einrichtung zur Herstellung von Rohrglas
    4 Transporteinrichtung
    5 thermische Verschließeinrichtung
    6 Glashohlkörper
    7 Schmelze
    8 Laser-basierte Bestrahlungseinrichtung
    9 Differenzdruckvorrichtung/ Überdruckanlage
    10 Laserstrahlung
    12 Fokussieroptik
    14 filamentartige Schädigung(en)
    16 offener Kanal/ offene Kanäle
    18 Ring
    19 2D-Code
    20 erster Endbereich
    22 zweiter Endbereich
    24 erster Boden
    26 zweiter Boden

    27 Wandung
    28 Außenoberfläche
    30 Ultrakurzpulslaser
    32 Rechnereinrichtung
    33 Vorrichtung zur Weiterverarbeitung von Glashohlkörperprodukten
    35 Sollbruchlinie
    36 Öffnung in 27
    38 Futter
    40 Ritzeinrichtung
    41 Ritzung
    43 Dichtung
    45 Gehäuse
    47 Pumpe

**Patentansprüche**

1. Verfahren zur Herstellung eines Glashohlkörperprodukts (1) mit folgenden Schritten:

   - Bereitstellen von einem Glashohlkörper (6) mit einer Außenoberfläche (28),
   - Formen des Glashohlkörperprodukts (1) mit einem ersten Endbereich (20) und einem zweiten Endbereich (22), wobei der erste Endbereich (20) mit einem ersten Boden (24) und der zweite Endbereich (22) mit einem zweiten Boden (26) verschlossen wird
   - Laser-basiertes Bestrahlen des Glashohlkörpers (6) mit fokussierter Laserstrahlung (10) zur Erzeugung von mehreren voneinander beabstandeten filamentartigen Schädigungen (14) in einer vorbestimmten Anordnung auf der Außenoberfläche (28) zumindest in dem ersten Endbereich (20), wobei zumindest durch einen Teil der filamentartigen Schädigungen (14) mehrere das Innere des Glashohlkörpers (6) mit der Außenoberfläche (28) verbindende offene Kanäle (16) gebildet werden, wobei der Durchmesser der Kanäle (16) auf größer als 0 bis kleiner als 50 Mikrometer eingestellt wird und durch mehrere der offenen Kanäle (16) eine gasdurchlässige Verbindung in das Innere hergestellt wird.

2. Verfahren zur Herstellung eines Glashohlkörperprodukts (1) nach Anspruch 1, wobei durch zumindest einen Teil der filamentartigen Schädigungen (14) mehrere offene Kanäle (16) in der Art gebildet werden, dass eine hinreichend große Querschnittsfläche für eine Entlüftung und/oder einen Druckausgleich erzeugt wird.

3. Verfahren zur Herstellung eines Glashohlkörperprodukts (1) nach Anspruch 1 oder 2, wobei der Durchmesser jedes einzelnen Kanals (16) auf größer als 0 bis kleiner als 10 Mikrometer, bevorzugt auf größer als 0 bis 3 Mikrometer und besonders bevorzugt auf 1 bis kleiner als 3 Mikrometer eingestellt wird.

4. Verfahren zur Herstellung eines Glashohlkörperprodukts (1) nach einem der vorhergehenden Ansprüche, wobei die offenen Kanäle (16) in Abständen von mindestens 7 Mikrometern und bevorzugt von mindestens 10 Mikrometern über den Umfang der Außenoberfläche (28) des Glashohlkörpers (6) angeordnet werden.

5. Verfahren zur Herstellung von Glashohlkörperprodukten (1) nach einem der vorhergehenden Ansprüche, bei dem der Erzeugung der filamentartigen Schädigungen (14) auf der Außenoberfläche (28) des Glashohlkörpers (6) ein Prozess eines wärmeweichen Trennens des Glashohlkörpers (6) in vorbestimmte Abschnitte vorgeschaltet oder nachgeschaltet wird, wobei die Abschnitte jeweils einen weiteren ersten Endbereich (20) und einen weiteren zweiten Endbereich (22) aufweisen, und wobei der erste Endbereich (20) unter Bildung eines ersten Bodens (24) und der zweite Endbereich (22) unter Bildung eines zweiten Bodens (26) verschlossen werden.

6. Verfahren zur Herstellung eines Glashohlkörperprodukts (1) nach einem der vorhergehenden Ansprüche, wobei durch zumindest einen Teil der filamentartigen Schädigungen (14) und/oder der offenen Kanäle (16) eine individuelle Codierung des Glashohlkörpers gebildet wird mit einer frei wählbaren geometrischen Anordnung der filamentartigen Schädigungen (14) und/oder der offenen Kanäle (16) in Form von Quadraten, Rechtecken, Parallelogrammen, Kreisen, Ellipsen, gemischten Formen oder Varianten von Data-Matrix-Codes.

7. Verfahren zur Herstellung eines Glashohlkörperprodukts (1) nach einem der vorhergehenden Ansprüche, wobei durch zumindest einen Teil der filamentartigen Schädigungen (14) und/oder der offenen Kanäle (16) eine individuelle Codierung des Glashohlkörpers gebildet wird mit einer frei wählbaren geometrischen Anordnung der filamentartigen Schädigungen (14) und/oder der offenen Kanäle (16), die Informationen zu Prozessparametern, zur Produktspezifikation, zu einer Fehlerart und/oder zu einer Fehlerposition enthält oder angibt.

8. Verfahren zur Weiterverarbeitung von mit dem Verfahren gemäß einem der vorstehenden Ansprüche hergestellten Glashohlkörperprodukten (1), bei welchem das Glashohlkörperprodukt (1) zur Weiterverarbeitung aufgetrennt wird, und wobei vor dem Auftrennen eine Druckdifferenz zwischen dem Inneren des Glashohlkörperprodukts (1) und dessen Umgebung hergestellt wird, so dass der Druck im Inneren höher als der Druck in der Umgebung ist, und wobei das Herstellen der Druckdifferenz durch einen Gasaustausch durch die offenen Kanäle (16) hindurch erfolgt, wobei beim Trennen entstehende Partikel durch den entweichenden Überdruck vom Glashohlkörper (6) weg befördert werden.

9. Verfahren zur Weiterverarbeitung gemäß dem vorstehenden Anspruch, **dadurch gekennzeichnet, dass** aus dem Glashohlkörperprodukt (1) hohle Glaserzeugnisse in Form von Glasrohrfläschchen, Glasampullen, Glaskarpulen oder Glasspritzen geformt werden.

10. Vorrichtung zur Herstellung von Glashohlkörperprodukten (1) nach dem Verfahren nach einem der Ansprüche 1 bis 9, umfassend:

    - eine Transporteinrichtung (4) für den Glashohlkörper (6) mit einer Außenoberfläche (28), die einen ersten Endbereich (20) und einen zweiten Endbereich (22) aufweist,
    - eine Laser-basierte Bestrahlungseinrichtung (8) zur Erzeugung von fokussierter Laserstrahlung (10) mittels einer Fokussieroptik (12) und eine Einrichtung, um die fokussierte Laserstrahlung (10) über die Außenoberfläche (28) zu führen, um die mehreren voneinander beabstandeten filamentartigen Schädigungen (14) in einer vorbestimmten Anordnung auf der Außenoberfläche (28) zumindest im ersten Endbereich (20) des Glashohlkörpers (6) zu erzeugen, um zumindest durch einen Teil der filamentartigen Schädigungen (14) mehrere das Innere des Glashohlkörpers (6) mit der Außenoberfläche (28) verbindende offene Kanäle (16) zu bilden, um den Durchmesser jedes einzelnen Kanals (16) im Mikrometer-Bereich einzustellen und um durch mehrere offene Kanäle (16), deren Durchmesser bei größer als 0 bis kleiner als 50 Mikrometer liegt, eine gasdurchlässige Verbindung in das Innere herzustellen, sowie
    - eine thermische Verschließeinrichtung (5) zum Heißumformen des Glashohlkörpers (6) derart, dass ein Glashohlkörperprodukt (1) mit zwei verschlossenen Enden erzeugt wird.

11. Vorrichtung zur Herstellung von Glashohlkörperprodukten (1) nach dem vorstehenden Anspruch, mit einer Transporteinrichtung (4) als Trenn- und Verschließeinrichtung ausgebildeten thermischen Verschließeinrichtung (5), um den Glashohlkörper (6) wärmeweich in vorbestimmte Abschnitte zu trennen, die jeweils einen weiteren ersten Endbereich (20) und einen weiteren zweiten Endbereich (22) aufweisen, trennt und den ersten Endbereich (20) unter Bildung eines ersten Bodens (24) und den zweiten Endbereich (22) unter Bildung eines zweiten Bodens (26) verschließt.

12. Vorrichtung zur Herstellung von Glashohlkörperprodukten (1) nach Anspruch 10 oder 11, umfassend eine Einrichtung (3) zur Herstellung von Rohrglas.

13. Glashohlkörperprodukt (1), umfassend einen Glashohlkörper (6) mit einer Außenoberfläche (28), die einen ersten Endbereich (20) und einen zweiten Endbereich (22) aufweist, wobei der erste Endbereich (20) mit einem ersten Boden (24) und der zweite Endbereich (22) mit einem zweiten Boden (26) verschlossen sind, wobei auf der Außenoberfläche (28) mehrere voneinander beabstandete filamentartige Schädigungen (14) angeordnet sind und zumindest ein Teil der filamentartigen Schädigungen (14) das Innere des Glashohlkörpers (6) mit der Außenoberfläche (28) verbindende offene Kanäle (16) bilden, wobei der Durchmesserr jedes einzelnen Kanals (16) im Mikrometer-Bereich bei größer als 0 bis kleiner als 50 Mikrometer liegt und mehrere im Mikrometer-Bereich eingestellte offene Kanäle (16) eine hinreichend große Querschnittsfläche für eine Entlüftung und/oder einen Druckausgleich bilden, bei dem die filamentartigen Schädigungen (14) und/oder die offenen Kanäle (16) in Abständen von mindestens 7 Mikrometern und bevorzugt von mindestens 10 Mikrometern über den Umfang der Außenoberfläche (28) des Glashohlkörpers (6) angeordnet sind.

14. Glashohlkörperprodukt (1) nach Anspruch 13, bei dem der Durchmesser der Kanäle (16) größer als 0 bis kleiner als 10 Mikrometer, bevorzugt größer als 0 bis 3 Mikrometer und besonders bevorzugt 1 bis kleiner als 3 Mikrometer beträgt.

15. Glashohlkörperprodukt (1) nach einem der Ansprüche 13 bis 14, bei dem zumindest ein Teil der filamentartigen Schädigungen (14) und/oder der offenen Kanäle (16) eine individuelle Codierung des Glashohlkörpers (6) bildet mit einer geometrischen Anordnung der filamentartigen Schädigungen (14) und/oder der offenen Kanäle (16) in Form von Quadraten, Rechtecken, Parallelogrammen, Kreisen, Ellipsen, gemischten Formen davon oder Varianten von Data-Matrix-Codes.

16. Glashohlkörperprodukt (1) nach einem der Ansprüche 13 bis 15, wobei die Anordnung der Kanäle (16) eine codierte Information technischer Daten des Glaskörperhohlprodukts (1), vorzugsweise mindestens eine der Angaben über Glastyp, Abmessungen oder Herstellungsdatum enthält.

17. Glashohlkörperprodukt (1) nach einem der Ansprüche 13 bis 16, wobei bei Vorliegen von Partikeln im Inneren des Glashohlkörperprodukts (1) die Partikelgrößen kleiner als 50 $\mu$m, bevorzugt kleiner als 25 $\mu$m und besonders bevorzugt kleiner als 10 $\mu$m betragen.

18. Glashohlkörperprodukt (1) nach einem der Ansprüche 13 bis 17, wobei die offenen Kanäle (16) insgesamt einen Gasströmungswiderstand aufweisen, der so hoch ist, dass bei einer Druckdifferenz von 1 Bar zwischen dem Inneren des Glashohlkörperprodukts (1) und der Umgebung des Glashohlkörperprodukts (1) der Volumenstrom für Luft kleiner ist als $2*10^{-2}$ Liter/s.

19. Verwendung von Glashohlkörperprodukten (1), hergestellt nach dem Verfahren nach einem der Ansprüche 1 bis 9 oder gemäß einem der Ansprüche 13 bis 18 zur Herstellung von Pharmaverpackungen oder Primärpackmittel für pharmazeutische Produkte.

**Claims**

1. A method for producing a hollow body glass product (1), comprising the steps of:

   - providing a hollow glass body (6) having an outer surface (28);
   - forming the hollow body glass product (1) so as to have a first end portion (20) and a second end portion (22), the first end portion (20) being sealed by a first bottom (24) and the second end portion (22) being sealed by a second bottom (26);
   - laser-based irradiating of the hollow glass body (6) with focused laser radiation (10) to produce a plurality of spaced apart filamentary defects (14) in a predetermined arrangement in the outer surface (28) of at least the first end portion (20), with at least part of the filamentary defects (14) defining a plurality of open passages (16) connecting the interior of the hollow glass body (6) to the outer surface (28) thereof, wherein the diameter of the passages (16) is set to be between more than 0 and less than 50 micrometres, and wherein a plurality of the open passages (16) provide gaseous communication to the interior.

2. The method for producing a hollow body glass product (1) according to claim 1, wherein at least part of the filamentary defects (14) form a plurality of open passages (16) in a manner to provide a total cross-sectional area sufficiently large for venting and/or for pressure equalization.

3. The method for producing a hollow body glass product (1) according to claim 1 or 2, wherein the diameter of each individual passage (16) is set to be between more than 0 and less than 10 micrometres, preferably between more than 0 and 3 micrometres, and most preferably between 1 micrometre and less than 3 micrometres.

4. The method for producing a hollow body glass product (1) according to any one of the preceding claims, wherein the open passages (16) are arranged along the perimeter of the outer surface (28) of the hollow glass body (6) at intervals of at least 7 micrometres and preferably at least 10 micrometres.

5. The method for producing hollow body glass products (1) according to any one of the preceding claims, comprising, prior to or following the producing of the filamentary defects (14) in the outer surface (28) of the hollow glass body (6), a process of separating, by heat-softening, the hollow glass body (6) into predetermined sections, the sections each having a further first end portion (20) and a further second end portion (22), the first end portion (20) being sealed by forming a first bottom (24) and the second end portion (22) by forming a second bottom (26).

6. The method for producing a hollow body glass product (1) according to any one of the preceding claims, wherein at least part of the filamentary defects (14) and/or of the open passages (16) define an individual code of the hollow glass body with a freely selectable geometric arrangement of the filamentary defects (14) and/or of the open passages (16) in the form of squares, rectangles, parallelograms, circles, ellipses, mixed shapes, or variants of data matrix codes.

7. The method for producing a hollow body glass product (1) according to any one of the preceding claims, wherein at least part of the filamentary defects (14) and/or of the open passages (16) define an individual code of the hollow glass body with a freely selectable geometric arrangement of the filamentary defects (14) and/or of the open passages (16), which code includes or indicates information about process parameters, product specification, a type of error, and/or an error position.

8. A method for further processing hollow body glass products (1) produced by the method according to any one of the preceding claims, wherein the hollow body glass product (1) is separated for further processing, and wherein, prior to the separating, a pressure difference is created between the interior of the hollow body glass product (1) and the exterior thereof such that the pressure inside is higher than the exterior pressure, and wherein said pressure difference is created through gas exchange through the open passages (16), wherein particles produced during the separating are transported away from the hollow glass body (6) by the escaping overpressure.

9. The method for further processing according to the preceding claim, **characterised by** forming, from the hollow body glass product (1), hollow glass articles in the form of glass tube vials, glass ampoules, glass cartridges, or glass syringes.

10. An apparatus for producing hollow body glass products (1) according to the method according to any one of claims 1 to 9, comprising:

    - conveying means (4) for the hollow glass body (6) that has an outer surface (28) with a first end portion (20) and a second end portion (22);
    - a laser-based irradiation device (8) for generating focused laser radiation (10) using focusing optics (12) and means for directing the focused laser radiation (10) over the outer surface (28) for producing the plurality of spaced apart filamentary defects (14) in a predetermined arrangement in the outer surface (28) in at least the first end portion (20) of the hollow glass body (6), for defining, by at least part of the filamentary defects (14), a plurality of open passages (16) connecting the interior of the hollow glass body (6) to the outer surface (28) thereof, for setting the diameter of each individual passage (16) in the micrometre range, and for providing gaseous communication to the interior by a plurality of open passages (16) which have a diameter between more than 0 and less than 50 micrometres; and
    - thermal sealing means (5) for hot forming the hollow glass body (6) such that a hollow body glass product (1) is produced, which has two closed ends.

11. The apparatus for producing hollow body glass products (1) as claimed in the preceding claim, comprising conveying means (4), thermal sealing means in the form of a separating and sealing device (5) for separating the hollow glass body (6) in a thermally softened state into predetermined sections, each one having a further first end portion (20) and a further second end portion (22), and for sealing the first end portion (20) by forming a first bottom (24) and the second end portion (22) by forming a second bottom (26).

12. The apparatus for producing hollow body glass products (1) according to claim 10 or 11, comprising an device (3) for producing tube glass.

13. A hollow body glass product (1), comprising a hollow glass body (6) having an outer surface (28) with a first end portion (20) and a second end portion (22), the first end portion (20) being sealed by a first bottom (24) and the second end portion (22) being sealed by a second bottom (26), wherein a plurality of spaced apart filamentary defects (14) are provided in the outer surface (28) and at least part of the filamentary defects (14) define open passages (16) connecting the interior of the hollow glass body (6) to the outer surface (28) thereof, wherein each individual passage (16) has a diameter in the micrometre range between greater than 0 and smaller than 50 micrometres, and wherein a plurality of the micrometre range-sized open passages (16) provide a total cross-sectional area sufficiently large for venting and/or for pressure equalization, wherein the filamentary defects (14) and/or the open passages (16) are arranged along the perimeter of the outer surface (28) of the hollow glass body (6) at intervals of at least 7 micrometres and preferably at least 10 micrometres.

14. The hollow body glass product (1) of claim 13, wherein the diameter of the passages (16) ranges from more than 0 to less than 10 micrometres, preferably from more than 0 to 3 micrometres, and most preferably from 1 micrometre to less than 3 micrometres.

15. The hollow body glass product (1) according to any one of claims 13 to 14, wherein at least part of the filamentary defects (14) and/or of the open passages (16) define an individual code of the hollow glass body (6), by a geometrical arrangement of the filamentary defects (14) and/or of the open passages (16) in the form of squares, rectangles, parallelograms, circles, ellipses, mixed shapes thereof, or variants of data matrix codes.

16. The hollow body glass product (1) according to any one of claims 13 to 15, wherein the arrangement of the passages (16) includes coded information of technical data of the hollow body glass product (1), preferably at least information about one of glass type, dimensions, and date of manufacture.

17. The hollow body glass product (1) according to any one of claims 13 to 16, wherein, if particles are present in the interior of the hollow body glass product (1), the size of said particles is less than 50 $\mu$m, preferably less than 25 $\mu$m, and most preferably less than 10 $\mu$m.

18. The hollow body glass product (1) according to any one of claims 13 to 17, wherein the open passages exhibit a total gas flow resistance sufficiently high such that at a pressure difference of 1 bar between the interior of the hollow body glass product (1) and the exterior of the hollow body glass product (1), the volume flow for air is less than 2 * 10$^{-2}$ litres/s.

19. Use of hollow body glass products (1) produced by the method according to any one of claims 1 to 9 or according to any one of claims 13 to 18 for producing pharmaceutical packaging or primary packaging for pharmaceutical products.

**Revendications**

1. Procédé de fabrication d'un produit à corps creux en verre (1), comprenant les étapes suivantes :

   - mise à disposition d'un corps creux en verre (6) doté d'une surface extérieure (28),
   - mise en forme du produit à corps creux en verre (1) avec une première zone d'extrémité (20) et une deuxième zone d'extrémité (22), la première zone d'extrémité (20) étant fermée par un premier fond (24) et la deuxième zone d'extrémité (22) par un deuxième fond (26),
   - irradiation à base de laser du corps creux en verre (6) avec un rayonnement laser (10) focalisé, aux fins de créer plusieurs endommagements (14) en forme de filaments espacés les uns des autres, dans une configuration prédéfinie sur la surface extérieure (28), au moins dans la première zone d'extrémité (20), sachant qu'au moins une partie des endommagements (14) en forme de filaments forment plusieurs canaux (16) ouverts reliant l'intérieur du corps creux en verre (2) à la surface extérieure (28), le diamètre des canaux (16) étant réglé pour être supérieur à 0 et allant jusqu'à une valeur inférieure à 50 micromètres, et plusieurs des canaux (16) ouverts établissant une liaison perméable au gaz vers l'intérieur.

2. Procédé de fabrication d'un produit à corps creux en verre (1) selon la revendication 1, selon lequel au moins une partie des endommagements (14) en forme de filaments forment plusieurs canaux (16) ouverts, de manière à créer une aire de section transversale suffisamment grande pour une ventilation et/ou une compensation de pression.

3. Procédé de fabrication d'un produit à corps creux en verre (1) selon la revendication 1 ou 2, selon lequel le diamètre de chaque canal (16) individuel est réglé pour être supérieur à 0 et allant jusqu'à une valeur inférieure à 10 micromètres, de préférence supérieure à 0 et allant jusqu'à 3 micromètres, et est de manière particulièrement avantageuse réglé à 1 micromètre jusqu'à une valeur inférieure à 3 micromètres.

**4.** Procédé de fabrication d'un produit à corps creux en verre (1) selon une des revendications précédentes, selon lequel les canaux (16) ouverts sont disposés avec des espacements d'au moins 7 micromètres et de préférence d'au moins 10 micromètres sur le pourtour de la surface extérieure (28) du corps creux en verre (6).

**5.** Procédé de fabrication de produits à corps creux en verre (1) selon une des revendications précédentes, selon lequel la génération des endommagements (14) en forme de filaments sur la surface extérieure (28) du corps creux en verre (6) est précédée ou suivie d'un processus d'une séparation à chaud du corps creux en verre (6) en portions prédéfinies, les portions présentant respectivement une première zone d'extrémité (20) supplémentaire et une deuxième zone d'extrémité (22) supplémentaire, et la première zone d'extrémité (20) étant fermée avec formation d'un premier fond (24) et la deuxième zone d'extrémité (22) avec formation d'un deuxième fond (26).

**6.** Procédé de fabrication d'un produit à corps creux en verre (1) selon une des revendications précédentes, selon lequel au moins une partie des endommagements (14) en forme de filaments et/ou des canaux (16) ouverts constituent un codage individuel du corps creux en verre, avec une configuration géométrique pouvant être librement choisie des endommagements (14) en forme de filaments et/ou des canaux (16) ouverts, sous la forme de carrés, rectangles, parallélogrammes, cercles, ellipses, formes mixtes ou variantes de codes Data Matrix.

**7.** Procédé de fabrication d'un produit à corps creux en verre (1) selon une des revendications précédentes, selon lequel au moins une partie des endommagements (14) en forme de filaments et/ou des canaux (16) ouverts constituent un codage individuel du corps creux en verre, avec une configuration géométrique pouvant être librement choisie des endommagements (14) en forme de filaments et/ou des canaux (16) ouverts, qui contient ou indique des informations concernant des paramètres de processus, la spécification du produit, un type de défaut et/ou une position de défaut.

**8.** Procédé de mise en œuvre ultérieure de produits à corps creux en verre (1) fabriqués avec le procédé selon une des revendications précédentes, selon lequel le produit à corps creux en verre (1) est ouvert en vue de la mise en œuvre ultérieure, et selon lequel on crée, avant l'ouverture, une différence de pression entre l'intérieur du produit à corps creux en verre (1) et son environnement, et selon lequel la création de la différence de pression est réalisée par un échange gazeux à travers les canaux (16) ouverts, des particules formées lors de l'ouverture étant évacuées du corps creux en verre (6) sous l'effet de la surpression qui s'échappe.

**9.** Procédé de mise en œuvre ultérieure selon la revendication précédente, **caractérisé en ce que**, à partir du produit à corps creux en verre (1), des produits en verre creux sont façonnés sous forme de flacons en tube de verre, ampoules en verre, cartouches en verre ou seringues en verre.

**10.** Dispositif de fabrication de produits à corps creux en verre (1) avec le procédé selon une des revendications 1 à 9, comprenant :

- un dispositif de transport (4) pour le corps creux en verre (6) doté d'une surface extérieure (28) qui présente une première zone d'extrémité (20) et une deuxième zone d'extrémité (22),
- un dispositif d'irradiation à base de laser (8) destiné à générer un rayonnement laser (10) focalisé, à l'aide d'une optique de focalisation (12), et un dispositif destiné à guider sur la surface extérieure (28) le rayonnement laser (10) focalisé, aux fins de créer la pluralité d'endommagements (14) en forme de filaments, espacés les uns des autres, dans une configuration prédéfinie sur la surface extérieure (28), au moins dans la première zone d'extrémité (20) du corps creux en verre (6), afin qu'au moins une partie des endommagements (14) en forme de filaments forment plusieurs canaux (16) ouverts reliant l'intérieur du corps creux en verre (6) à la surface extérieure (28), afin de régler le diamètre de chaque canal (16) individuel dans le domaine du micromètre, et afin d'établir une liaison perméable au gaz vers l'intérieur, par l'intermédiaire de plusieurs canaux (16) ouverts dont le diamètre est supérieur à 0 et va jusqu'à une valeur inférieure à 50 micromètres, et
- un dispositif de fermeture thermique (5) destiné au formage à chaud du corps creux en verre (6), de manière à réaliser un produit à corps creux en verre (1) doté de deux extrémités fermées.

**11.** Dispositif de fabrication de produits à corps creux en verre (1) selon la revendication précédente, comprenant un dispositif de transport (4), un dispositif de fermeture thermique (5) réalisé comme dispositif de séparation et de fermeture pour séparer le corps creux en verre (6) à chaud en portions prédéfinies, présentant respectivement une première zone d'extrémité (20) supplémentaire et une deuxième zone d'extrémité (22) supplémentaire, qui sépare et ferme la première zone d'extrémité (20) avec formation d'un premier fond (24) et la deuxième zone d'extrémité (22) avec formation d'un deuxième fond (26).

**12.** Dispositif de fabrication de produits à corps creux en verre (1) selon les revendications 10 ou 11, comprenant un dispositif (3) destiné à la fabrication de verre tubulaire.

**13.** Produit à corps creux en verre (1), comprenant un corps creux en verre (6) doté d'une surface extérieure (28) qui présente une première zone d'extrémité (20) et une deuxième zone d'extrémité (22), la première zone d'extrémité (20) étant fermée par un premier fond (24) et la deuxième zone d'extrémité (22) par un deuxième fond (26), plusieurs endommagements (14) en forme de filaments, espacés les uns des autres, étant disposés sur la surface extérieure (28), et au moins une partie des endommagements (14) en forme de filaments constituant des canaux (16) ouverts reliant l'intérieur du corps creux en verre (6) à la surface extérieure (28), le diamètre de chaque canal (16) individuel se situant dans le domaine du micromètre et étant supérieur à 0 et allant jusqu'à une valeur inférieure à 50 micromètres, et plusieurs canaux (16) ouverts, réglés dans le domaine du micromètre, créant une aire de section transversale suffisamment grande pour une ventilation et/ou une compensation de pression, dans lequel les endommagements (14) en forme de filaments et/ou les canaux (16) ouverts sont disposés avec des espacements d'au moins 7 micromètres et de préférence d'au moins 10 micromètres sur le pourtour de la surface extérieure (28) du corps creux en verre (6).

**14.** Produit à corps creux en verre (1) selon la revendication 13, dans lequel le diamètre des canaux (16) est supérieur à 0 et va jusqu'à une valeur inférieure à 10 micromètres et est de préférence supérieur à 0, allant jusqu'à 3 micromètres, et est de manière particulièrement avantageuse de 1 allant jusqu'à une valeur inférieure à 3 micromètres.

**15.** Produit à corps creux en verre (1) selon une des revendications 13 à 14, dans lequel au moins une partie des endommagements (14) en forme de filaments et/ou des canaux (16) ouverts constituent un codage individuel du corps creux en verre (6), avec une configuration géométrique des endommagements (14) en forme de filaments et/ou des canaux (16) ouverts, sous la forme de carrés, rectangles, parallélogrammes, cercles, ellipses, formes mixtes ou variantes de codes Data Matrix.

**16.** Produit à corps creux en verre (1) selon une des revendications 13 à 15, dans lequel la configuration des canaux (16) contient une information codée de données techniques du produit à corps creux en verre (1), de préférence au moins une des indications concernant le type de verre, les dimensions ou la date de fabrication.

**17.** Produit à corps creux en verre (1) selon une des revendications 13 à 16, dans lequel, en cas de présence de particules à l'intérieur du produit à corps creux en verre (1), les tailles des particules sont inférieures à 50 $\mu$m, de préférence inférieures à 25 $\mu$m, et de manière particulièrement avantageuse inférieures à 10 $\mu$m.

**18.** Produit à corps creux en verre (1) selon une des revendications 13 à 17, dans lequel les canaux (16) ouverts présentent au total une résistance à l'écoulement de gaz qui est si élevé qu'en cas de différence de pression de 1 bar entre l'intérieur du produit à corps creux en verre (1) et l'environnement du produit à corps creux en verre (1), le flux volumique pour l'air est inférieur à $2*10^{-2}$ litre/s.

**19.** Utilisation de produits à corps creux en verre (1) fabriqués avec le procédé selon une des revendications 1 à 9 ou selon une des revendications 13 à 18, pour la fabrication d'emballages pharmaceutiques ou de matières de conditionnement primaires pour des produits pharmaceutiques.

2

Fig. 1

Fig. 2

Fig. 3

Fig. 5

Fig. 6

Fig. 4

Fig. 8

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4444547 C2
- DE 10047850 A1
- DE 102015116848 A1
- US 20150034612 A1
- US 20150140735 A1
- DE 1114992 A
- EP 1369389 A2
- WO 2017009149 A1